# EUROPÄISCHE PATENTSCHRIFT

(11) **EP 3 092 143 B1**
(45) Veröffentlichungstag und Bekanntmachung des Hinweises auf die Patenterteilung: **18.04.2018**
(21) Anmeldenummer: 14823922.1
(22) Anmeldetag: 10.12.2014
(51) Int. Cl.: B60K 37/06, G06F 3/0488

(54) **ANZEIGEBEDIENEINHEIT UND VERFAHREN ZUM ANZEIGEN ZUSÄTZLICHER HINWEISE AUF EINER ANZEIGEEINHEIT**
DISPLAY OPERATOR CONTROL UNIT AND METHOD FOR DISPLAYING ADDITIONAL INSTRUCTIONS ON A DISPLAY UNIT
MODULE DE COMMANDE D'AFFICHAGE ET PROCÉDÉ D'AFFICHAGE D'INDICATIONS SUPPLÉMENTAIRES SUR UN MODULE D'AFFICHAGE

(30) Priorität: 06.01.2014 DE 102014200024
(43) Veröffentlichungstag der Anmeldung: 16.11.2016
(73) Patentinhaber: Volkswagen Aktiengesellschaft, 38440 Wolfsburg (DE)
(72) Erfinder: WILD, Holger, 10179 Berlin (DE); CZELNIK, Mark Peter, 38444 Wolfsburg (DE)
(86) Internationale Anmeldenummer: PCT/EP2014/077176
(87) Internationale Veröffentlichungsnummer: WO 2015/101467

(56) Entgegenhaltungen:
- EP-B1- 2 121 372
- US-A1- 2010 302 179

## Beschreibung

### Stand der Technik

Die vorliegende Erfindung betrifft eine Anzeigebedieneinheit für ein Fortbewegungsmittel sowie ein Verfahren zum Anzeigen zusätzlicher Hinweise zu auf einer Anzeigebedieneinheit angezeigten Anzeigeelementen. Insbesondere betrifft die vorliegende Erfindung eine verbesserte Anwenderführung bei der Bedienung mittels Gesten in Bereichen ohne Kontakt mit einer Anzeigeeinheit.

Im Stand der Technik sind Bedienkonzepte für Mensch-Maschine-Schnittstellen (MMS, engl. "Human-Machine-Interface" (HMI)) mit Bildschirmen bekannt. Bei aktuellen Realisierungen werden auch Annäherungen eines Eingabemittels (z.B. ein Finger eines Anwenders) erkannt und Hinweise zur Bedienung ausgegeben. Neue Sensoriken unterteilen die Anzeige in Bereiche und heben nur die für den Anwender relevanten/gewünschten Bereiche hervor. Zur Erkennung des Eingabemittels kommen beispielsweise Infrarotsensoren und kamerabasierte Sensoren zum Einsatz.

US 2010/302179 A1 offenbart ein Verfahren zum Anzeigen zusätzlicher Hinweise zu auf einer Anzeigeeinheit angezeigten Anzeigeelementen umfassend die Schritte: Erkennen eines Eingabemittels in einem ersten Eingabebereich vor der Anzeigeeinheit und im Ansprechen darauf; Ausgeben eines ersten Hinweises zu einem ersten Anzeigeelement und eines zweiten Hinweises zu einem zweiten Anzeigeelement.

EP 2 121 372 B1 offenbart Aktivierungsvolumina, welche vor einer Anzeigefläche angeordnet sind und die Möglichkeit, einen Betriebsmodus durch die Präsenz in einer der Aktivierungsvolumina zu ändern. Auch eine Unterscheidung einer Bedienung von der Position eines Fahrers beziehungsweise von der Position eines Beifahrers wird beschrieben.

Die im Stand der Technik bekannten Anordnungen und Systeme schöpfen die physikalischen Möglichkeiten bei der Unterstützung eines Anwenders nicht zufriedenstellend aus. Es ist daher eine Aufgabe der vorliegenden Erfindung, den vorstehend genannten Bedarf zu stillen.

### Offenbarung der Erfindung

Die vorliegende Erfindung löst die vorstehend genannte Aufgabe durch ein Verfahren zum Anzeigen zusätzlicher Hinweise sowie eine Anzeigebedieneinheit und ein Fortbewegungsmittel. Das erfindungsgemäße Verfahren ist geeignet zum Anzeigen zusätzlicher Hinweise zu auf einer Anzeigeeinheit angezeigten Anzeigeelementen. Die Anzeigeelemente können softwarebasiert auf einem Bildschirm als Anzeigeeinheit dargestellt werden. Im Stand der Technik werden solche Anzeigeelemente auch als "Kacheln" bezeichnet. Die zusätzlichen Hinweise dienen temporär zur zusätzlichen Information für einen Anwender der Anzeigeeinheit. Mit anderen Worten werden die auf den Anzeigeelementen enthaltenen Hinweise/Informationen durch die zusätzlichen Hinweise erfindungsgemäß in Abhängigkeit einer Anwenderinteraktion ein- bzw. ausgeblendet. Zunächst wird hierzu ein Eingabemittel in einem ersten Eingabebereich vor der Anzeigeeinheit erkannt. Das Eingabemittel kann beispielsweise ein Finger eines Anwenders, ein Stylus o.Ä. sein. Der erste Eingabebereich befindet sich erfindungsgemäß vor der Anzeigeeinheit, womit ein Volumen beschrieben wird, dessen Grenzflächen nicht mit einer Oberfläche der Anzeigeeinheit zusammenfallen. Im Ansprechen auf ein Erkennen des Eingabemittels werden ein erster zusätzlicher Hinweis zu dem ersten Anzeigeelement und ein zweiter zusätzlicher Hinweis zu einem zweiten Anzeigeelement angezeigt. Beispielsweise modifizieren die zusätzlichen Hinweise die Darstellung der Anzeigeelemente oder bilden zusätzliche, den Anzeigeelementen überlagerte optische Informationen. Anschließend wird ein Eingabemittel in einem zweiten Eingabebereich vor der Anzeigeeinheit erkannt. Auch der zweite Eingabebereich stellt ein Volumen dar, welches durch Grenzflächen umschlossen wird, welche nicht mit einer Oberfläche der Anzeigeeinheit zusammenfallen. Jedoch können jeweils eine Grenzfläche des ersten Eingabebereichs und des zweiten Eingabebereichs identisch sein, wodurch die Eingabebereiche unmittelbar aneinander grenzen. Bevorzugt kann der zweite Eingabebereich erst im Zuge einer weiteren Annäherung des aus dem ersten Eingabebereich kommenden Eingabemittels an die Anzeigeeinheit erreicht werden. Im Ansprechen auf das Erkennen des Eingabemittels im zweiten Eingabebereich wird der zweite Hinweis zum zweiten Anzeigeelement entfernt, wobei der erste Hinweis weiterhin angezeigt wird. Dies kann beispielsweise dadurch veranlasst werden, dass das Eingabemittel in Richtung des ersten Anzeigeelementes geführt wird, nicht jedoch in Richtung des zweiten Anzeigeelementes. Durch Ausblenden des zweiten Hinweises wird dem Anwender verdeutlicht, auf welches Anzeigeelement sich seine aktuelle Eingabe bezieht. Insbesondere während des Wahrnehmens einer Fahraufgabe kann der Anwender in geeigneter Weise über die Folgen seiner Interaktion mit dem Fahrzeug hingewiesen werden.

Die Unteransprüche zeigen bevorzugte Weiterbildungen der Erfindung.

Bevorzugt sind der erste Eingabebereich und der zweite Eingabebereich jeweils derart angeordnet, dass ihre in Richtung der Anzeigeeinheit orientierten Grenzflächen im Wesentlichen parallel zur Oberfläche der Anzeigeeinheit orientiert sind. Eine solche Orientierung ist für einen Anwender besonders einfach nachzuvollziehen und die Bedienung entsprechend einfach zu erlernen. Durch die Verwendung zweier Eingabebereiche, welche sich vor der Anzeigeeinheit befinden, kann ein Kontakt mit der Anzeigeeinheit bereits eine dritte Eingabe darstellen, mittels welcher beispielsweise eine Auswahl bzw. Bestätigung des ersten Anzeigeelementes erfolgen kann. Diese Auswahl erfolgt beim Erreichen eines Kontaktes (Abstand zur Anzeigeeinheit = 0 mm) mit der Oberfläche der Anzeigeeinheit, welche auch als drucksensitive Oberfläche ("Touchscreen") bezeichnet wird. Auf diese Weise werden durch eine einzige Bewegung ("Geste") mehrere Interaktionen vorgenommen, welche eine abschließende Interaktion, nämlich die Auswahl bzw. die Bestätigung einer Schaltfläche, vorbereiten. Das Verfahren ist somit geeignet, die Bedienung effizienter und intuitiver zu gestalten.

Der erste Hinweis und/oder der zweite Hinweis können ein Anzeigen eines Symboles und/oder eines Textes umfassen. Zusätzlich oder alternativ können der erste Hinweis und/oder der zweite Hinweis eine Sprachausgabe umfassen, welche den Anwender über die den Anzeigeelementen zugeordnete Funktionen informiert.

Bei der Verwendung einer Sprachausgabe kann das Ausgeben der Hinweise beispielsweise nacheinander erfolgen, so dass der Anwender, ohne die Anzeigeeinheit zu fokussieren, über die dargestellten Anzeigeelemente informiert wird. Bei längerem Verweilen kann die Sprachausgabe auch wiederholt werden, bis das Eingabemittel den ersten Eingabebereich verlässt. Wechselt das Eingabemittel in den zweiten Eingabebereich, kann beispielsweise nur noch die dem ersten Hinweis entsprechende Sprachausgabe wiedergegeben bzw. zyklisch wiederholt werden. Auf diese Weise lässt sich eine Anwenderschnittstelle bedienen, ohne dass der Anwender sein Augenmerk auf die Anzeige zu richten hat.

Weiter bevorzugt umfasst das erfindungsgemäße Verfahren ein Erkennen eines Übertrittes des Eingabemittels von einem dem ersten Anzeigeelement zugeordneten Teil des zweiten Eingabebereiches in einen dem zweiten Anzeigeelement zugeordneten Teil des zweiten Eingabebereiches. Mit anderen Worten wechselt der Anwender beispielsweise von einem Bereich vor dem ersten Anzeigeelement in einen Bereich vor dem zweiten Anzeigeelement, ohne den ersten Eingabebereich zu verlassen. In Ansprechen darauf kann der dem zweiten Anzeigeelement zugeordnete zweite zusätzliche Hinweis ausgegeben werden, während der dem ersten Anzeigeelement zugeordnete erste zusätzliche Hinweis unterdrückt wird. Das Unterdrücken kann generell ein "Nicht-Ausgeben" umfassen, sofern es sich bei dem Hinweis um eine zyklisch ausgegebene Information handelt. Sofern der Hinweis dauerhaft ausgegeben wird, kann das Unterdrücken ein Ausblenden bzw. ein Nicht-mehr-Ausgeben umfassen.

Bevorzugt kann das Anzeigen der zusätzlichen Hinweise erst nach einem Verweilen des Eingabemittels in dem jeweiligen Eingabebereich für eine Mindestzeitdauer erfolgen. Dies kann beispielsweise durch einen Timer erfolgen, welcher gestartet wird, sobald das Eingabemittel erstmalig den jeweiligen Eingabebereich erreicht. Sofern das Eingabemittel den jeweiligen Eingabebereich vor Ablaufen des Timers nicht verlässt, werden die zusätzlichen Hinweise wie oben beschrieben ausgegeben bzw. angezeigt. Insbesondere betrifft diese Ausgestaltung den ersten Eingabebereich, wodurch der Start des erfindungsgemäßen Verfahrens nicht bei einem unbeabsichtigten (nur kurzzeitigen) Aufenthalt einer Hand des Anwenders im Eingabebereich erfolgt.

Bevorzugt erfolgt das Erkennen des Eingabemittels richtungsselektiv, so dass eine Position eines Anwenders relativ zur Anzeigeeinheit ermittelt wird. Entsprechend kann ein Inhalt zur Wiedergabe als zusätzlicher Hinweis in Abhängigkeit der erkannten Position ausgewählt werden. Alternativ kann eine Ausgabe des jeweiligen Hinweises unterdrückt. Dies kann beispielsweise dann vorteilhaft sein, wenn einem Beifahrer als Anwender der Zugriff auf bestimmte Funktionen nicht gestattet werden soll. Selbstverständlich können auch unterschiedliche Funktionen und entsprechende Hinweise für die unterschiedlichen erkannten Positionen ausgegeben werden.

Die im Rahmen der vorliegenden Erfindung als erste Anzeigeelemente bzw. zweite Anzeigeelemente bezeichneten Bildschirminhalte können unterschiedlichen Funktionsumfängen zugeordnet sein. Beispielsweise kann eine Navigationskarte, eine Zielinformation einer Routenberechnung, eine Außentemperatur, eine Übersicht zu Klima-/Heizungseinstellungen, Sitzeinstellungen, das Bild einer Rückfahrkamera und/oder Lichteinstellungen und/oder Wetterinformationen am Standort und/oder am Zielort und/oder Medieninformationen der aktuellen Quelle, insbesondere Radio, Media, und/oder Bedienhinweise/Tipps ("Wussten Sie schon, ...?") und/oder Bilder, z.B. Dia-Show und/oder Kalenderinformationen und/oder Spritspartipps und/oder Offroadeinstellungen, einem jeweiligen Anzeigeelement zugeordnet sein. Auf diese Weise können unterschiedliche Funktionen zeitgleich auf der Anzeigeeinheit zur Auswahl gestellt und der Anwender erfindungsgemäß bei ihrer Bedienung unterstützt werden.

Gemäß einem zweiten Aspekt der vorliegenden Erfindung wird eine Anzeigebedieneinheit vorgeschlagen, welche eine Anzeigeeinheit, eine Bedieneinheit und eine Verarbeitungseinheit umfasst. Die Anzeigeeinheit ist unter anderem eingerichtet, Anzeigeelemente und Hinweise anzuzeigen. Die Bedieneinheit ist eingerichtet, ein Eingabemittel in einem ersten Eingabebereich und in einem zweiten Eingabebereich vor der Anzeigeeinheit zu erkennen. Die Bedieneinheit kann beispielsweise im Infrarotbereich emittierende Infrarotdioden (LEDs) und korrespondierende Sensoren umfassen. Auf diese Weise kann sie Gesten unabhängig von einem Kontakt des verwendeten Eingabemittels erkennen und zur Auswertung an die Verarbeitungseinheit weiterleiten. Die Verarbeitungseinheit kann beispielsweise einen programmierbaren Prozessor umfassen, welcher mit der Anzeigeeinheit und der Bedieneinheit informationstechnisch verbunden ist. Durch die vorgenannten Komponenten ist die Anzeigebedieneinheit eingerichtet, ein Verfahren durchzuführen, wie es oben als erstgenannter Erfindungsaspekt eingehend beschrieben worden ist. Die Merkmale, Merkmalskombinationen sowie die sich aus diesen ergebenden Vorteile entsprechen den in Verbindung mit dem erstgenannten Erfindungsaspekt beschriebenen derart ersichtlich, dass zur Vermeidung von Wiederholungen auf die obigen Ausführungen verwiesen wird.

Bevorzugt kann die Anzeigebedieneinheit eine Anwenderschnittstelle eines Fortbewegungsmittels sein. Üblicherweise sind die entsprechenden Anzeigeeinheiten fest in das Armaturenbrett des Fortbewegungsmittels integriert. Selbiges kann für die Bedieneinheit gelten.

Gemäß einem dritten Aspekt der vorliegenden Erfindung wird ein Fortbewegungsmittel, insbesondere ein straßenzugelassenes Fahrzeugs (z.B. Pkw, Lkw) vorgeschlagen, welches eine Anzeigebedieneinheit gemäß dem zweitgenannten Erfindungsaspekt umfasst. Auch bezüglich der Merkmale, Merkmalskombinationen und der sich aus diesen ergebenden Vorteile wird auf die erstgenannten Erfindungsaspekte verwiesen.

### Kurze Beschreibung der Zeichnung

Nachfolgend werden Ausführungsbeispiele der Erfindung unter Bezugnahme auf die begleitenden Zeichnungen im Detail beschrieben. In den Zeichnungen ist:
- Figur 1: eine schematische Ansicht eines Fortbewegungsmittels gemäß einem Ausführungsbeispiel der vorliegenden Erfindung;
- Figur 2: eine schematische Ansicht eines Bedienschrittes mit einem Ausführungsbeispiel der Anzeigebedieneinheit;
- Figuren 3-8: Schaubilder zur Veranschaulichung von Bedienschritten bei der Ausführung eines erfindungsgemäßen Verfahrens; und
- Figur 9: ein Flussdiagramm veranschaulichend Schritte eines Ausführungsbeispiels eines erfindungsgemäßen Verfahrens.

### Ausführungsformen der Erfindung

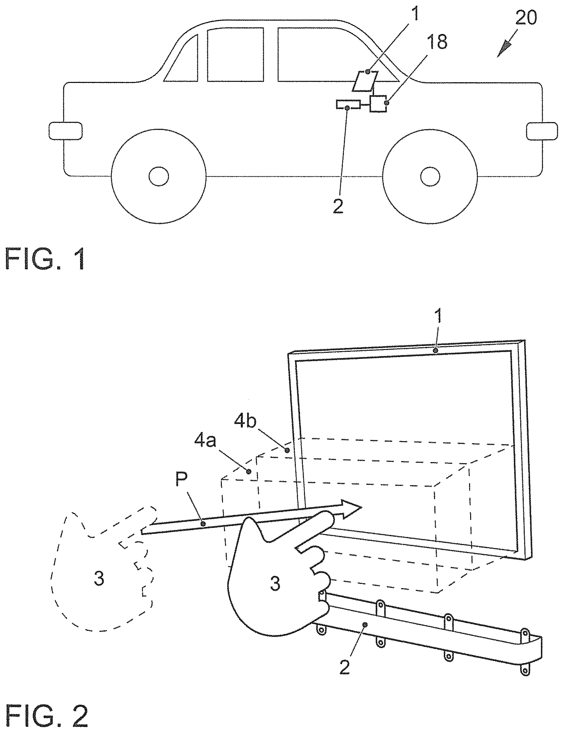

Figur 1 zeigt ein Fahrzeug 20 als Fortbewegungsmittel, in welchem eine Anwenderschnittstelle mit einem Bildschirm 1 als Anzeigeeinheit, einem Leuchtdioden-Array 2 als Bedieneinheit und einem programmierbaren Prozessor 18 als Verarbeitungseinheit vorgesehen sind. Die Komponenten der Anwenderschnittstelle sind über Datenleitungen miteinander verbunden, um die Ausführung eines erfindungsgemäßen Verfahrens zu ermöglichen, wie es nachfolgend in Verbindung mit den Figuren 2 bis 9 im Detail beschrieben wird.

Figur 2 zeigt eine Prinzipdarstellung einer Anwenderinteraktion mit einer Anzeigebedieneinheit gemäß einem Ausführungsbeispiel der vorliegenden Erfindung. Vor dem Bildschirm 1 sind als gestrichelte Quader 4a, 4b ein erster Eingabebereich und ein zweiter Eingabebereich dargestellt. Der Quader 4b ist dabei unmittelbar zwischen dem ersten Quader 4a und dem Bildschirm 1 angeordnet. Die beiden Quader 4a, 4b grenzen somit unmittelbar und nahtlos aneinander, während der zweite Quader 4b einen Abstand zwischen 0 mm und 1 mm zum Bildschirm 1 aufweist. Zudem ist die Hand 3 eines Anwenders als Eingabemittel dargestellt, welche eine Bewegung von einem Bereich außerhalb der Quader 4a, 4b entlang eines Pfeils P bis in den Quader 4a durchführt. Ein Aufenthalt der Hand 3 wird durch das Leuchtdioden-Array 2 unterhalb des Bildschirms 1 erkannt und an eine (in Figur 2 nicht dargestellte) Verarbeitungseinheit weitergeleitet. Nachfolgend werden Bedienschritte der dargestellten Anordnung in Verbindung mit den zugehörigen Bildschirmdarstellungen in Form von Screenshots beschrieben.

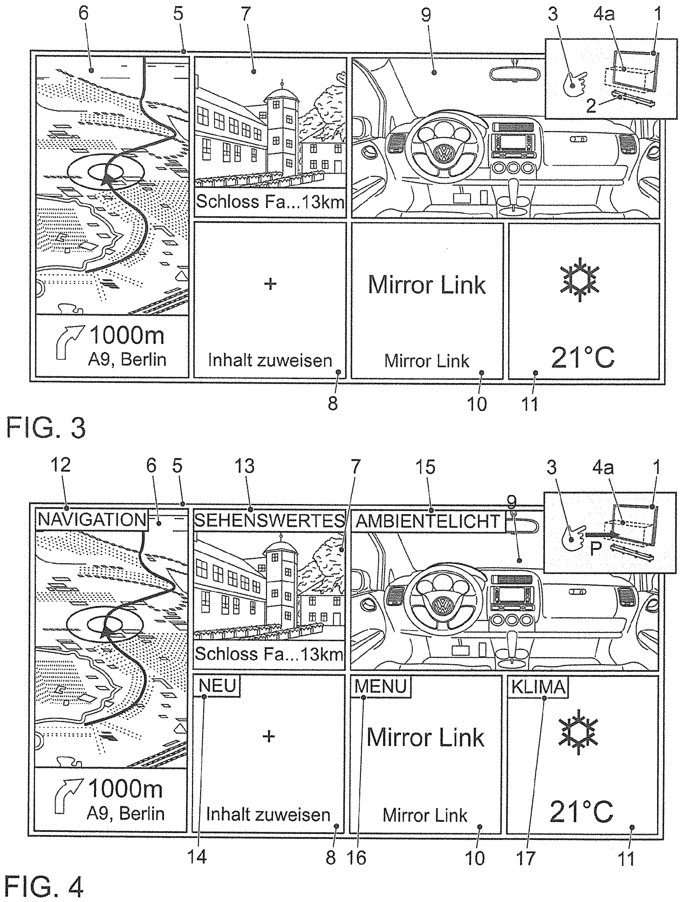

Figur 3 zeigt ein Anwendungsszenario (oben rechts im Bild), bei welchem sich die Hand 3 des Anwenders außerhalb eines Erfassungsbereiches 4 vor dem Bildschirm 1 befindet. Der zugehörige Bildschirminhalt 5 ist in sechs Sektionen 6 bis 11 eingeteilt, von welchen eine erste Sektion einen Kartenausschnitt 6 einer bevorstehenden Route, eine zweite Sektion Informationen sowie ein Foto 7 zu einer nahegelegenen Sehenswürdigkeit, eine dritte Sektion eine Darstellung 9 zur Visualisierung einer Innenraumkonfiguration; eine vierte Sektion bislang keinen Inhalt 8; eine fünfte Sektion einen Schnellzugriff (Shortcut) auf ein Menü-Kontext im Infotainmentsystem und eine sechste Sektion eine eingestellte Innentemperatur 11 des Fahrzeugs anzeigen.

In Figur 4 erreicht die Hand 3 des Anwenders (siehe die Spitze des Pfeils P) den ersten Eingabebereich 4a. Zur Unterstützung des Anwenders werden wie folgt zusätzliche Hinweise 12 bis 17 in den vorstehend diskutierten Sektionen 6 bis 11 der Bildschirmdarstellung 5 angezeigt: In einer oberen linken Ecke der ersten Sektion 6 wird ein blau hinterlegtes Textfeld 12 mit der Beschriftung "Navigation" angezeigt. Entsprechend ist ein der zweiten Sektion 7 zugeordnetes Textfeld 13 mit "Sehenswertes" beschriftet. Die Farbe der Textfelder 12, 13 gruppiert die korrespondieren Informationen für den Anwender als zur Navigation bzw. Routenführung gehörig. In der dritten Sektion 9 ist mit dem Erreichen des ersten Eingabebereiches 4a ein gelb hinterlegtes Textfeld 15 als zusätzlicher Hinweis in der oberen linken Ecke der Sektion 9 angezeigt worden, welches den Schriftzug "Ambientelicht" trägt. Entsprechendes gilt für die unterhalb der dritten Sektion 9 angeordneten Sektionen 10, 11, welche ebenfalls gelb hinterlegte Textfelder 16, 17 aufweisen und mit "Menu" bzw. "Klima" betitelt sind. Die gelbe Farbe der zusätzlichen Hinweise für die dritte, fünfte und sechste Sektion 9, 10, 11 gruppiert die Informationen optisch als zu einer grundlegenden fahrzeugbezogenen Informationseinheit gehörig. Die vierte Sektion 8 hat bei Erreichen des ersten Eingabebereiches 4a zwar einen zusätzlichen Hinweis in Form eines Textfeldes 14 mit dem Schriftzug "Neu" hinzugewonnen. Da jedoch noch keine optische Gruppierung vorgenommen werden kann, ist das Textfeld 14 bislang grau hinterlegt.

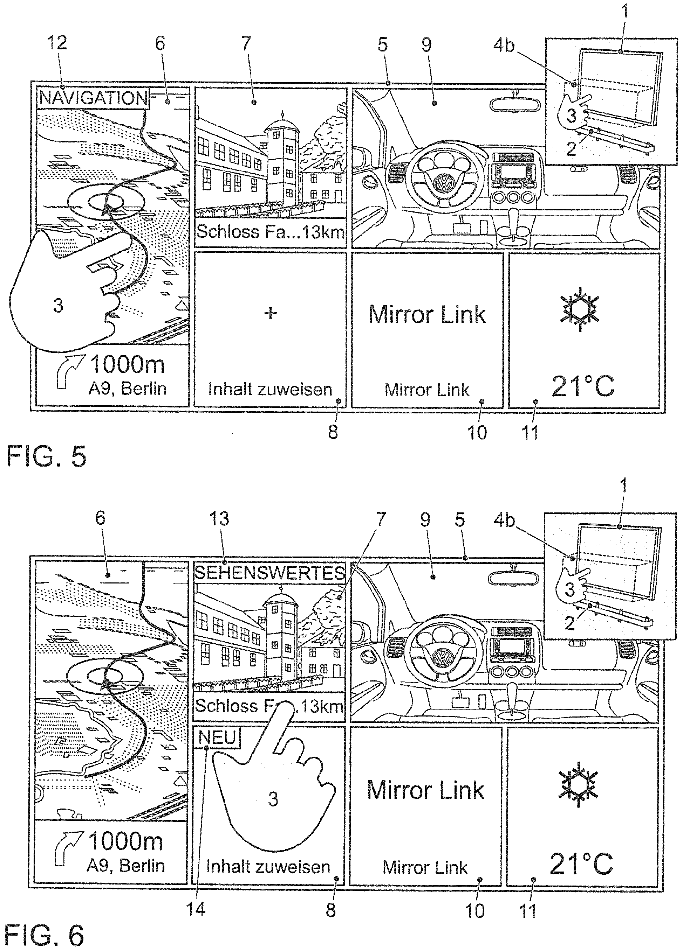

Figur 5 zeigt einen Bedienschritt bei Erreichen des zweiten Eingabebereiches 4b durch die Hand 3 des Anwenders. Die Hand 3 des Anwenders ist nun in einem geringen Abstand vor der ersten Sektion 6 der Bildschirmanzeige 5 angelangt. Der zusätzliche Hinweis in Form des Textfeldes 12 wird erfindungsgemäß nach wie vor angezeigt. Die übrigen zusätzlichen Hinweise 13 bis 17 wurden hingegen ausgeblendet, um den Fokus auf die Navigationskarte zu stärken. Dabei wird dem Anwender auch verdeutlicht, dass zeitlich nachfolgende Eingaben sich stets auf die erste Sektion 6 bzw. eine mit ihr assoziierte Funktion beziehen. Der Anwender hat die Möglichkeit, in dem dargestellten Bedienschritt eine Touch-Geste (Anklicken der Anzeigeeinheit 1 im Bereich der ersten Sektion 6) oder einen Wechsel in eine zweite Sektion 7 oder eine fünfte Sektion 8 vorzunehmen.

Im in Figur 6 dargestellten Beispiel wählt der Anwender die erste Option, indem er die Hand 3 von dem der ersten Sektion 6 zugeordneten Teil des zweiten Eingabebereiches 4b in einen der zweiten Sektion 7 zugeordneten Teil des Eingabebereiches 4b bringt. Im Ansprechen darauf wird die Ausgabe des zweiten Hinweises in Form des Textfeldes 13 vorgenommen, während die Ausgabe des Textfeldes 12 unterdrückt wird.

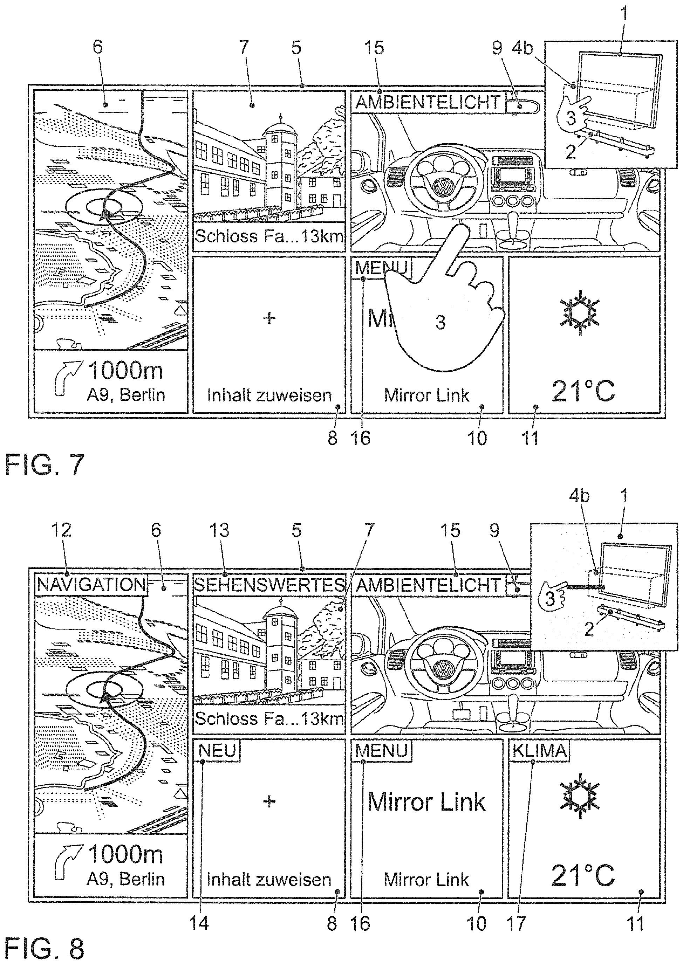

Entsprechend bringt der Anwender seine Hand 3 in Figur 7 in zwei Teilbereiche des zweiten Eingabebereiches 4b, welche der dritten Sektion 9 sowie der fünften Sektion 10 zugeordnet. Im Ansprechen darauf werden die zugeordneten zusätzlichen Hinweise in Form der Textfelder 15, 16 angezeigt, während nun auch die Ausgabe des Textfeldes 13 in der zweiten Sektion 7 wiederrufen bzw. unterdrückt wird.

In Figur 8 entfernt der Anwender seine Hand 3 aus dem zweiten Eingabebereich 4b, indem er den Abstand seiner Hand 3 zum Bildschirm 1 erhöht. Auf diesem Wege durchquert er den ersten Eingabebereich 4a, im Ansprechen worauf sämtliche zusätzlichen Hinweise 12 bis 17 erneut bzw. fortwährend angezeigt werden. Auf diese Weise erhält der Anwender eine Rückmeldung darüber, dass seine Eingabe keinem bestimmten Funktionsbereich auf der Bildschirmdarstellung 5 zugeordnet wird.

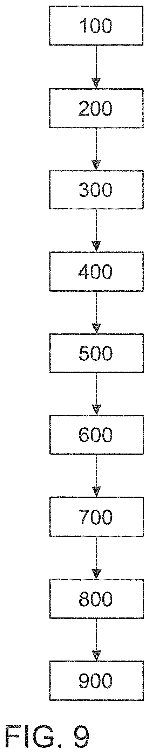

Figur 9 zeigt ein Flussdiagramm veranschaulichend Schritte eines Ausführungsbeispiels eines erfindungsgemäßen Verfahrens. In Schritt 100 wird ein Eingabemittel in einem ersten Eingabebereich vor der Anzeigeeinheit erkannt. Zudem wird in Schritt 200 eine mutmaßliche Position eines Anwenders des Eingabemittels relativ zu der Anzeigeeinheit bzw. relativ zu dem Leuchtdioden-Array erkannt. Hierbei wird in einem Ausführungsbeispiel klassifiziert, ob es sich bei dem Anwender um den Fahrer oder den Beifahrer eines Fahrzeugs handelt. In Schritt 300 wird ein Inhalt für einen ersten Hinweis in Abhängigkeit der klassifizierten Position ausgewählt. Sofern die Position dem Fahrer des Fahrzeugs zugeordnet worden ist, können weitreichendere Zugriffsrechte zugeordnet werden bzw. mehr Hinweise auf zur Verfügung stehenden Funktionen dargestellt werden, als wenn der Beifahrer als Anwender ermittelt worden wäre. In Schritt 400 werden ein erster Hinweis zu einem ersten Anzeigeelement und ein zweiter Hinweis zu einem zweiten Anzeigeelement ausgegeben. Über diese Hinweise wird der Anwender über die zur Auswahl stehenden Funktionen informiert. Wählt der Anwender durch Annähern seiner Hand an die Anzeigeeinheit eine der Funktionen zur genaueren Betrachtung aus, wird in Schritt 500 die Hand als Eingabemittel in einem zweiten Eingabebereich vor der Anzeigeeinheit erkannt. Im Ansprechen darauf werden in Schritt 600 mit Ausnahme des zum ersten Anzeigeelement gehörigen Hinweises alle zusätzlichen Hinweise unterdrückt bzw. nicht mehr ausgegeben. In Schritt 700 wird nachfolgend ein Übertritt des Eingabemittels von einem dem ersten Anzeigeelement zugeordneten Teil des zweiten Eingabebereiches in einen dem zweiten Anzeigeelement zugeordneten Teil des zweiten Eingabebereiches erkannt. Mit anderen Worten bewegt der Anwender in Schritt 700 seine Hand aus einem Bereich vor einer ersten Sektion in einen Bereich vor einer zweiten, benachbarten Sektion, ohne dass seine Hand den zweiten Eingabebereich verlässt. In Schritt 800 wird im Ansprechen darauf ein zweiter Hinweis zum zweiten Anzeigeelement ausgegeben. Mit anderen Worten wird erkannt, dass der Fokus des Anwenders nun auf dem zweiten Anzeigeelementes liegt, weshalb in Schritt 900 die Ausgabe des ersten Hinweises zum ersten Anzeigeelement unterdrückt wird. Auf diese Weise ermöglicht die vorliegende Erfindung eine Unterstützung eines jeweiligen Fokus auf einer Anzeigeeinheit.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Bildschirm
- 2: Bedieneinheit
- 3: Hand
- 4: Eingabebereich
- 4a: erster Eingabebereich/Quader
- 4b: zweiter Eingabebereich/Quader
- 5: Bildschirminhalt
- 6, 7, 8,: Sektionen
- 9, 10, 11 12, 13, 14, 15, 16, 17: zusätzliche Hinweise, Textfelder
- 18: Prozessor
- 20: Pkw
- 100-900: Verfahrensschritte
- P: Pfeil

## Patentansprüche

1. Verfahren zum Anzeigen zusätzlicher Hinweise (12-17) zu auf einer Anzeigeeinheit (1) angezeigten Anzeigeelementen (6-11) umfassend die Schritte:
- Erkennen (100) eines Eingabemittels (3) in einem ersten Eingabebereich (4a) vor der Anzeigeeinheit (1) und im Ansprechen darauf
- Ausgeben (400) eines ersten Hinweises (12) zu einem ersten Anzeigeelement (6) und eines zweiten Hinweises (13) zu einem zweiten Anzeigeelement (7), **gekennzeichnet durch**
- Erkennen (500) eines Eingabemittels (3) in einem zweiten Eingabebereich (4b) vor der Anzeigeeinheit (1) und im Ansprechen darauf
- Unterdrücken (600) des zweiten Hinweises (13) zum zweiten Anzeigeelement (7), wobei insbesondere der erste Hinweis (12) weiterhin angezeigt wird.

2. Verfahren nach Anspruch 1, wobei ein Abstand des ersten Eingabebereiches (4a) von der Anzeigeeinheit (1) größer ist als ein Abstand des zweiten Eingabebereiches (4b) von der Anzeigeeinheit (1), und wobei ein Abstand des zweiten Eingabebereiches (4b) von der Anzeigeeinheit (1) größer 0mm ist.

3. Verfahren nach Anspruch 1 oder 2, wobei der Hinweis (12-17) ein Symbol und/oder einen Text und/oder eine Sprachausgabe umfasst.

4. Verfahren nach einem der vorstehenden Ansprüche weiter umfassend die Schritte
- Erkennen (700) eines Übertrittes des Eingabemittels (3) von einem dem ersten Anzeigeelement (6) zugeordneten Teil des zweiten Eingabebereiches (4b) in einen dem zweiten Anzeigeelement (7) zugeordneten Teil des zweiten Eingabebereiches (4b) und im Ansprechen darauf
- Ausgeben (800) des zweiten Hinweises (13) zum zweiten Anzeigeelement (7), und insbesondere Unterdrücken (900) des ersten Hinweises (12) zum ersten Anzeigeelement (6).

5. Verfahren nach einem der vorstehenden Ansprüche, wobei das Anzeigen (400) des ersten Hinweises (12) und des zweiten Hinweises (13) erst nach einem Verweilen des Eingabemittels (3) in dem ersten Eingabebereich (4a) bzw. zweiten Eingabebereich (4b) für eine Mindestzeitdauer erfolgt.

6. Verfahren nach einem der vorstehenden Ansprüche, weiter umfassend den Schritt
- Erkennen (200) einer Position eines Anwenders des Eingabemittels (3) relativ zur Anzeigeeinheit (1), und
- Auswählen (300) eines Inhaltes und/oder Unterdrücken des ersten Hinweises (12), insbesondere auch des zweiten Hinweises (13), in Abhängigkeit der Position.

7. Verfahren nach einem der vorstehenden Ansprüche wobei das erste Anzeigeelement (6) und/oder das zweite Anzeigeelement (7) jeweils unterschiedlichen Funktionsumfängen, insbesondere aus der folgenden Liste
- Navigationskarte,
- Zielinformation,
- Außentemperatur,
- Klima-/Heizungseinstellungen,
- Sitzeinstellungen,
- Rückfahrkamera,
- Lichteinstellungen,
- Wetterinformationen am Standort und/oder am Zielort,
- Medieninformationen der aktuellen Quelle, insbesondere Radio, Media,
- Bedienhinweise/Tipps,
- Bilder, Dia-Show,
- Kalenderinformationen,
- Spritspartipps
- Offroadeinstellungen,
zugeordnet sind.

8. Anzeigebedieneinheit umfassend
- eine Anzeigeeinheit (1),
- eine Bedieneinheit (2), und
- eine Verarbeitungseinheit (18), wobei
- die Anzeigeeinheit (1) eingerichtet ist, Anzeigeelemente (6-11) und Hinweise (12-17) anzuzeigen,
- die Bedieneinheit (2) eingerichtet ist, ein Eingabemittel (3) in einem ersten Eingabebereich (4a) und/oder in einem zweiten Eingabebereich (4b) vor der Anzeigeeinheit (1) zu erkennen,
- die Verarbeitungseinheit (18) mit der Anzeigeeinheit (1) und der Bedieneinheit (2) informationstechnisch wirkverbunden ist, **dadurch gekennzeichnet, dass** die Anzeigebedieneinheit eingerichtet ist, ein Verfahren gemäß einem der vorstehenden Ansprüche auszuführen.

9. Anzeigebedieneinheit nach Anspruch 8, eine Anwenderschnittstelle eines Fortbewegungsmittels (20) ist.

10. Fortbewegungsmittel, insbesondere Fahrzeug, umfassend eine Anzeigebedieneinheit nach einem der Ansprüche 8 oder 9.

## Claims

1. Method for displaying additional indications (12-17) relating to display elements (6-11) displayed on a display unit (1), comprising the following steps:
- detecting (100) an input means (3) in a first input region (4a) in front of the display unit (1) and in response thereto
- outputting (400) a first indication (12) relating to a first display element (6) and a second indication (13) relating to a second display element (7), **characterized by**
- detecting (500) an input means (3) in a second input region (4b) in front of the display unit (1) and in response thereto
- suppressing (600) the second indication (13) relating to the second display element (7), wherein in particular the first indication (12) continues to be displayed.

2. Method according to Claim 1, wherein a spacing of the first input region (4a) from the display unit (1) is greater than a spacing of the second input region (4b) from the display unit (1), and wherein a spacing of the second input region (4b) from the display unit (1) is greater than 0 mm.

3. Method according to Claim 1 or 2, wherein the indication (12-17) comprises a symbol and/or a text and/or a voice output.

4. Method according to one of the preceding claims, further comprising the following steps:
- detecting (700) a transfer of the input means (3) from a part of the second input region (4b) assigned to the first display element (6) into a part of the second input region (4b) assigned to the second display element (7) and in response thereto
- outputting (800) the second indication (13) relating to the second display element (7), and in particular suppressing (900) the first indication (12) relating to the first display element (6).

5. Method according to one of the preceding claims, wherein the displaying (400) of the first indication (12) and of the second indication (13) occurs only after a dwelling of the input means (3) in the first input region (4a) or second input region (4b) for a minimum period.

6. Method according to one of the preceding claims, further including the following step:
- detecting (200) a position of a user of the input means (3) relative to the display unit (1), and
- selecting (300) a content and/or suppressing the first indication (12), in particular also the second indication (13), depending on the position.

7. Method according to one of the preceding claims, wherein the first display element (6) and/or the second display element (7) has/have each been assigned to differing function ranges, in particular from the following list:
- navigation map,
- destination information,
- outside temperature,
- air-conditioning/heating settings,
- seat settings,
- reversing camera,
- light settings,
- weather information at the location and/or at the destination,
- media information of the current source, in particular radio, media,
- operating indications/tips,
- images, slideshow,
- calendar information,
- fuel-saving tips,
- off-road settings.

8. Display control unit comprising:
- a display unit (1),
- a control unit (2), and
- a processing unit (18), wherein
- the display unit (1) has been set up to display indications (12-17) and display elements (6-11),
- the control unit (2) has been set up to detect an input means (3) in a first input region (4a) and/or in a second input region (4b) in front of the display unit (1),
- the processing unit (18) is operably connected to the display unit (1) and to the control unit (2) for data processing, **characterized in that** the display control unit has been set up to execute a method according to one of the preceding claims.

9. Display control unit according to Claim 8, is a user interface of a means of locomotion (20).

10. Means of locomotion, in particular a vehicle, including a display control unit according to one of Claims 8 and 9.

## Revendications

1. Procédé pour afficher des indications supplémentaires (12-17) concernant des éléments d'affichage (6-11) affichés sur une unité d'affichage (1), comprenant les étapes suivantes :
- la reconnaissance (100) d'un moyen de saisie (3) dans une première zone de saisie (4a) devant l'unité d'affichage (1) et, en réponse à cela,
- la sortie (400) d'une première indication (12) concernant un premier élément d'affichage (6) et d'une deuxième indication (13) concernant un deuxième élément d'affichage (7), **caractérisé par**
- la reconnaissance (500) d'un moyen de saisie (3) dans une deuxième zone de saisie (4b) devant l'unité d'affichage (1) et, en réponse à cela,
- la suppression (600) de la deuxième indication (13) concernant le deuxième élément d'affichage (7), dans lequel en particulier la première indication (12) continue d'être affichée.

2. Procédé selon la revendication 1, dans lequel une distance de la première zone de saisie (4a) par rapport à l'unité d'affichage (1) est supérieure à une distance de la deuxième zone de saisie (4b) par rapport à l'unité d'affichage (1), et dans lequel une distance de la deuxième zone de saisie (4b) par rapport à l'unité d'affichage (1) est supérieure à 0 mm.

3. Procédé selon la revendication 1 ou 2, dans lequel l'indication (12-17) comprend un symbole et/ou un texte et/ou une sortie vocale.

4. Procédé selon l'une des revendications précédentes, comprenant en outre les étapes suivantes :
- la reconnaissance (700) d'un passage du moyen de saisie (3) d'une partie, associée au premier élément d'affichage (6), de la deuxième zone de saisie (4b) à une partie, associée au deuxième élément d'affichage (7), de la deuxième zone d'affichage (4b) et en réponse à cela,
- la sortie (800) de la deuxième indication (13) concernant le deuxième élément d'affichage (7), et en particulier la suppression (900) de la première indication (12) concernant le premier élément d'affichage (6).

5. Procédé selon l'une des revendications précédentes, dans lequel l'affichage (400) de la première indication (12) et de la deuxième indication (13) s'effectue seulement après un séjour du moyen de saisie (3) dans la première zone de saisie (4a) ou la deuxième zone de saisie (4b) pendant une durée minimale.

6. Procédé selon l'une des revendications précédentes, comprenant en outre l'étape suivante :
- la reconnaissance (200) d'une position d'un utilisateur du moyen de saisie (3) par rapport à l'unité d'affichage (1), et
- la sélection (300) d'un contenu et/ou la suppression de la première indication (12), en particulier également de la deuxième indication (13), en fonction de la position.

7. Procédé selon l'une des revendications précédentes, dans lequel le premier élément d'affichage (6) et/ou le deuxième élément d'affichage (7) sont respectivement associés à différents périmètres fonctionnels, en particulier de la liste suivante :
- carte de navigation,
- information de destination,
- température extérieure,
- réglages de climatisation/chauffage,
- réglages de siège,
- caméra de recul,
- réglages des phares,
- informations météorologiques au niveau local et/ou du lieu de destination,
- informations des médias de la source actuelle, en particulier radio, médias,
- instructions de fonctionnement/astuces,
- images, diaporama,
- informations de calendrier,
- astuces d'économie de carburant,
- réglages tout-terrain.

8. Unité de commande d'affichage comprenant :
- une unité d'affichage (1),
- une unité de commande (2), et
- une unité de traitement (18), dans laquelle
- l'unité d'affichage (1) est conçue pour afficher des éléments d'affichage (6-11) et des indications (12-17),
- l'unité de commande (2) est conçue pour reconnaître un moyen de saisie (3) dans une première zone de saisie (4a) et/ou dans une deuxième zone de saisie (4b) devant l'unité d'affichage (1),
- l'unité de traitement (18) est en liaison active de technique informatique avec l'unité d'affichage (1) et l'unité de commande (2), **caractérisée en ce que** l'unité de commande d'affichage est conçue pour mettre en oeuvre un procédé selon l'une des revendications précédentes.

9. Unité de commande d'affichage selon la revendication 8, est une interface utilisateur d'un moyen de locomotion (20).

10. Moyen de locomotion, en particulier véhicule, comprenant une unité de commande d'affichage selon l'une des revendications 8 ou 9.
